# FASCICULE DE BREVET EUROPEEN

(11) **EP 3 499 423 B1**
(45) Date de publication et mention de la délivrance du brevet: **21.10.2020**
(21) Numéro de dépôt: 18206378.4
(22) Date de dépôt: 15.11.2018
(51) Int. Cl.: G06K 19/07

(54) **MODULE A TRANSPONDEUR RFID POUR UNE COMMUNICATION D'INFORMATIONS A UN DISPOSITIF DE LECTURE**
RFID-TRANSPONDERMODUL FÜR EINE KOMMUNIKATION VON INFORMATIONEN AN EINE LESEVORRICHTUNG
MODULE WITH RFID TRANSPONDER FOR COMMUNICATING INFORMATION TO A READING DEVICE

(30) Priorité: 15.12.2017 EP 17207598
(43) Date de publication de la demande: 19.06.2019
(73) Titulaire: The Swatch Group Research and Development Ltd, 2074 Marin (CH)
(72) Inventeur: Casagrande, Arnaud, 2014 Bôle (CH); Gorisse, Jean, 2000 Neuchâtel (CH); Arend, Jean-Luc, 2035 Corcelles (CH)
(74) Mandataire: ICB SA

(56) Documents cités:
- EP-A1- 2 993 626
- WO-A1-2008/153242
- WO-A1-2014/121338
- WO-A1-2014/135920
- US-A1- 2002 106 988
- US-A1- 2016 092 706

## Description

### DOMAINE TECHNIQUE DE L'INVENTION

L'invention concerne un module à transpondeur RFID, qui peut être passif ou semi-passif, pour une communication d'informations à un dispositif de lecture.

L'invention concerne également un système de communication d'informations avec un module à transpondeur RFID.

L'invention concerne également un procédé de mise en action du module à transpondeur RFID pour la transmission d'informations à un dispositif de lecture.

### ETAT DE LA TECHNIQUE

Habituellement pour la transmission d'informations, il est utilisé une communication RFID entre un transpondeur et un lecteur notamment par une connexion en champ proche (NFC) ou Bluetooth. Le transpondeur, qui peut être passif, est tout d'abord réveillé par un signal d'interrogation d'un lecteur, et un redresseur dans le transpondeur permet de prélever du signal reçu, une tension d'alimentation pour le fonctionnement dudit transpondeur. Généralement une fois réveillé, le transpondeur peut transmettre par exemple une information constante, qui est un numéro d'identification du transpondeur ou du produit ou objet sur lequel il est placé. Cette information constante est donc transmise par le transpondeur sur requête du lecteur RFID en communication.

Dans des transpondeurs RFID habituels, la transmission de données ou de l'information constante se fait avec des débits moyens de l'ordre de quelques centaines de kbits/s. Cela nécessite une assez longue transmission de données et de ce fait une consommation relativement importante. Cela ne permet pas en principe d'utiliser uniquement de l'énergie prélevée d'une source externe d'appoint connectée au circuit transpondeur pour permettre une alimentation suffisante jusqu'à la transmission de toutes les données, ce qui constitue un inconvénient.

Dans le cas d'une connexion par Bluetooth, il y a tout d'abord une synchronisation effectuée avec le lecteur. Il est aussi utilisé un lourd protocole de communication, qui est compliqué et fort consommateur de courant. De ce fait, il n'est pas envisageable d'utiliser une telle communication par Bluetooth pour un transpondeur passif ou semi-passif alimenté par extraction d'énergie d'une source d'énergie externe, ce qui constitue un inconvénient.

Un transpondeur ou dispositif portable RFID peut être placé sur un objet en mouvement ou une personne ou un animal. Le transpondeur peut comprendre des capteurs pour effectuer des mesures de différents paramètres physiques de l'objet ou de la personne ou de l'animal. Ces mesures peuvent être transmises à un lecteur ou station de base pour une utilisation ou un traitement à distance des mesures. Cependant le transpondeur ou le dispositif portable RFID doit être alimenté par une source d'énergie suffisante de manière à être en mesure de transmettre les mesures effectuées sans une trop forte consommation, ce qui est difficile à réaliser par un transpondeur ou dispositif portable de l'état de la technique.

On peut citer la demande de brevet WO 2008/153242 A1 ou la demande de brevet WO 2012/125425 A1, qui décrit un dispositif portable, sous la forme de patch, muni de différents capteurs. Ce dispositif portable peut être placé sur une personne pour déterminer par l'intermédiaire de plusieurs capteurs, différents paramètres physiologiques de la personne (biorythmes). Les mesures effectuées peuvent être mémorisées et transmises à une station de traitement, qui gère les mesures effectuées par le dispositif portable sur la personne pour un suivi médical par exemple. Le dispositif portable comprend une batterie pour fournir l'alimentation nécessaire pour obtenir les différentes mesures par les capteurs. Cependant ce dispositif portable ne peut fonctionner sans la batterie d'alimentation et sa consommation n'est pas réduite de manière à effectuer des mesures périodiquement et pour pouvoir transmettre l'information mémorisée à la station de traitement rapidement, ce qui constitue un inconvénient.

La demande de brevet US 2016/0092706 A1 décrit un dispositif pour une communication à rétrodiffusion. Le dispositif comprend une batterie, un processeur, au moins un capteur relié au processeur et un transpondeur TAG. Ce dispositif transmet une grande quantité d'information dans un temps très court. Il est utilisé une fréquence porteuse supérieure à 1 GHz par exemple à 2.45 GHz ou 5.8 GHz et une modulation QAM pour des débits élevés. Cependant les mesures par le ou les capteurs ne sont pas effectuées à faible consommation.

La demande de brevet WO 2014/135920 A1 décrit un dispositif RFID qui comprend au moins un capteur relié à un microcontrôleur et une source d'énergie d'appoint. Cette source d'énergie d'appoint peut être un élément piézoélectrique ou photovoltaïque ou thermoélectrique. Rien n'est prévu pour adapter le cadencement à basse consommation pour effectuer les mesures du capteur.

La demande de brevet WO 2014/121338 A1 décrit un transpondeur RFID à faible puissance et muni de capteurs. Le transpondeur comprend encore un processeur lié aux capteurs, une source de tension, et une mémoire. Trois modes de consommation d'énergie sont prévus, à savoir faible, moyen et haut modes de consommation d'énergie. Les mesures des capteurs sont effectuées dans un mode moyen de consommation et mémorisées dans une mémoire non volatile pour être transmises à un lecteur lors d'une demande de lecture.

La demande de brevet EP 2 993 626 A1 décrit un transpondeur RFID muni principalement d'un processeur, d'une mémoire, de générateurs d'horloge, d'une source de tension, et d'un sélecteur de capteurs connectés externe. Un générateur d'horloge peut comprendre un oscillateur de type RC ou en anneau.

### RESUMÉ DE L'INVENTION

L'invention a donc pour but de fournir un module à transpondeur RFID pour une communication d'informations à un dispositif de lecture palliant les inconvénients susmentionnés de l'état de la technique, et fonctionnant à faible tension d'alimentation pour pouvoir effectuer périodiquement des mesures par au moins un capteur et les transmettre rapidement au passage d'un dispositif de lecture.

A cet effet, l'invention concerne un module à transpondeur qui comprend les caractéristiques mentionnées dans la revendication indépendante 1.

Des formes particulières du module à transpondeur sont définies dans les revendications dépendantes 2 à 14.

Un avantage du module à transpondeur selon l'invention réside dans le fait qu'il est alimenté par extraction d'énergie d'une source d'énergie d'appoint, afin de lui permettre de fonctionner partiellement pour effectuer des mesures par au moins un capteur et de préférence par un certain nombre de capteurs. Le module à transpondeur reste alimenté en continu et effectue des mesures par I au moins un capteur afin de mémoriser les résultats des mesures dans une unité mémoire avec au moins une mémoire volatile. Les capteurs sont reliés à un microcontrôleur, qui est peul cadencé par un oscillateur à faible consommation, qu'un du type RC ou en anneau.

Dès qu'une communication peut être établie avec un lecteur à proximité, toutes les données de mesure peuvent être transmises à très haut débit par un transmetteur activé au moins dès cet instant et dans un laps de temps très court. L'oscillateur du transmetteur peut être réveillé à la réception d'un signal d'interrogation et/ou de synchronisation provenant du dispositif de lecture RFID pour cadencer les opérations de transmission des données de mesure. Dès que toutes les données de mesure mémorisées ont été transmises, le transmetteur peut à nouveau être placé dans un mode de repos.

A cet effet, l'invention concerne aussi un système de communication d'informations, qui comprend les caractéristiques mentionnées dans la revendication indépendante 15.

A cet effet, l'invention concerne aussi un procédé de mise en action d'un module à transpondeur dans un système de communication d'informations, qui comprend les caractéristiques mentionnées dans la revendication indépendante 16.

Des étapes particulières du procédé sont définies dans les revendications dépendantes 17 et 18.

### BRÈVE DESCRIPTION DES FIGURES

Les buts, avantages et caractéristiques d'un module à transpondeur RFID pour la communication d'informations, le système de communication le comprenant, et le procédé de mise en action du module à transpondeur RFID apparaîtront mieux dans la description suivante sur la base d'au moins une forme d'exécution non limitative illustrée par les dessins sur lesquels :
- la figure 1 est une vue simplifiée d'un système de communication d'informations avec au moins un module à transpondeur et un ou plusieurs dispositifs de lecture pour la communication à haut débit des informations du module à transpondeur vers le dispositif de lecture à proximité selon l'invention, et
- la figure 2 représente un schéma bloc simplifié des composants électroniques du module à transpondeur RFID avec le ou les capteurs de mesure et la ou les sources d'énergie d'alimentation du module à transpondeur RFID selon l'invention.

### DESCRIPTION DETAILLEE DE L'INVENTION

Dans la description suivante, les composants électroniques d'un module à transpondeur RFID pour la communication d'informations à au moins un dispositif de lecture à proximité, et du système de communication de données le comprenant, qui sont bien connus d'un homme du métier dans ce domaine technique, ne sont décrits que de manière simplifiée.

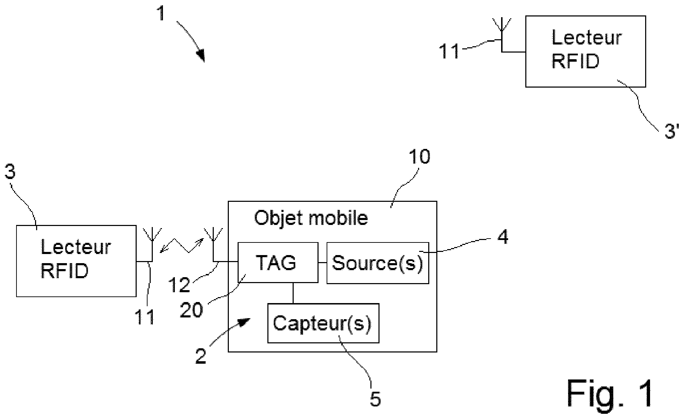

La figure 1 représente un système de communication de données ou commandes 1. Le système 1 comprend principalement au moins un module à transpondeur 2, qui peut être placé sur un objet mobile 10, tel qu'une personne ou un animal, ou un véhicule de tout type, et un ou plusieurs dispositifs de lecture 3, 3' disposés en des emplacements différents sur une zone définie. Les emplacements des dispositifs de lecture 3, 3' peuvent être des endroits dans un lieu public, dans une habitation, dans un magasin, sur un parcours dans la nature, dans une zone urbaine ou dans divers autres endroits.

Le module à transpondeur 2, placé par exemple sur une personne ou un animal 10, peut être du type passif ou semi-passif. Selon la forme d'exécution présentée à la figure 1, il comprend un circuit transpondeur 20, qui peut être personnalisé au porteur du module à transpondeur 2, au moins une source d'alimentation 4 du circuit transpondeur 20, et au moins un capteur de mesure 5.

La source d'alimentation 4 est une source d'énergie d'appoint, qui peut être une cellule solaire, un générateur thermoélectrique (TEG), qui est aussi connu comme générateur Seebeck, un circuit à induction magnétique, un élément piézoélectrique ou éventuellement une petite batterie. Une extraction d'énergie de la source d'énergie d'appoint peut être effectuée par le circuit transpondeur 20 pour charger un accumulateur de charges afin de permettre d'alimenter en tension le circuit transpondeur 20. Il peut être utilisé une combinaison de plusieurs sources d'énergie d'appoint 4 pour alimenter le circuit transpondeur.

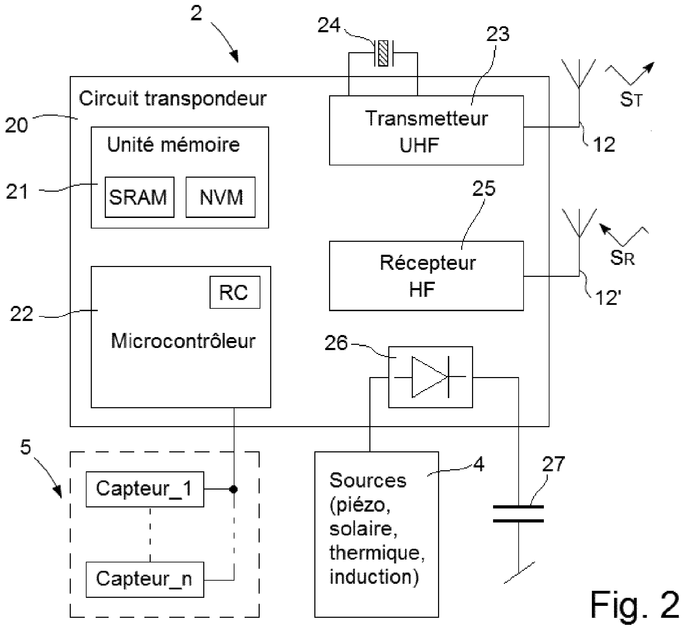

De préférence, le module à transpondeur 2 peut comprendre un ensemble de capteurs 5 reliés au circuit transpondeur 20. Il peut être envisagé d'utiliser différents capteurs 5 pour mesurer au moins par périodes temporelles déterminées, des paramètres physiologiques de la personne ou de l'animal 10 (biorythmes). L'ensemble de capteurs 5 peut comprendre un capteur de température, un capteur de pression, un pulse-mètre, un capteur magnétique, un accéléromètre, un gyroscope, un capteur optique ou d'autres types de capteur selon l'application. Les mesures effectuées par les capteurs peuvent être mémorisées après un échantillonnage ou une conversion analogique en numérique au moins temporairement dans au moins une mémoire comme expliqué ci-après en référence à la figure 2.

Avec la ou les sources d'énergie d'appoint 4, la majeure partie des composants électroniques du circuit transpondeur 20 et les capteurs 5 peuvent fonctionner en continu, car leur consommation est fortement réduite. Par contre, quand le module à transpondeur 2 s'approche d'un dispositif de lecture 3 par exemple à moins de 50 cm, ce dispositif de lecture 3 transmet par au moins une antenne 11, un signal d'interrogation et/ou de synchronisation à une fréquence porteuse de l'ordre de 868 MHz par exemple, au module à transpondeur 2. Cela a pour effet d'activer intégralement tous les composants électroniques dudit module à transpondeur 2. Dans cet état entièrement activé, le module à transpondeur 2 peut transmettre par une antenne 12, une grande partie des données de mesure mémorisées par un transmetteur UHF à destination du dispositif de lecture 3 en interrogation, qui les reçoit par l'antenne 11. De préférence l'intégralité des mesures effectuées par les capteurs 5 liés au circuit transpondeur 20, sont transmises à très haut débit par exemple à un débit de l'ordre de 26 Mbits/s et à ultra haute fréquence de l'ordre de 5.8 GHz.

On constate qu'avec la transmission à très haut débit et ultra haute fréquence de transmission, toutes les mesures mémorisées provenant des capteurs 5 peuvent être transmises très rapidement dans un temps très court inférieur à 1 s et sans requérir une grande consommation électrique dudit module à transpondeur 2. Une fois que toutes les données de mesure ont été transmises, le transmetteur du circuit transpondeur 20 peut passer dans un mode de repos avant une nouvelle interrogation d'un dispositif de lecture 3, 3'.

Un tel module à transpondeur 2 peut être utilisé pour contrôler les biorythmes d'une personne ou d'un animal 10 (objet mobile) où les mesures effectuées par les capteurs changent continuellement. Un dispositif de lecture 3 peut être disposé par exemple dans une partie d'une maison ou dans un jardin ou aussi dans une chatière si l'animal est un chat, pour prélever toutes les mesures mémorisées des capteurs en fonction. Comme les mesures des capteurs peuvent être réalisées à faible tension et faible consommation, le module à transpondeur 2 reste activé en continu pour cette partie du circuit transpondeur 20. Le transmetteur dudit module est encore au repos avant l'interrogation du dispositif de lecture 3 au passage de la personne ou de l'animal, tel qu'un chat par exemple dans une chatière. Chaque dispositif de lecture 3, 3' peut encore être relié par câble ou sans fil à une unité centrale, tel qu'un ordinateur, pour la gestion de toutes les données de mesure.

La figure 2 représente plus en détail les composants électroniques du module à transpondeur RFID 2 pour mieux comprendre son fonctionnement.

Le module à transpondeur 2 comprend généralement un circuit transpondeur 20, au moins un capteur de mesure 5 et de préférence un ensemble de capteurs de mesure 5, et une ou plusieurs sources d'énergie, qui peuvent être des sources d'énergie d'appoint 4, dont l'énergie peut être extraite pour l'alimentation du circuit transpondeur 20 et d'autres parties du module à transpondeur 2.

Le ou les n capteurs Capteur_1 à Capteur_n sont reliés à un microcontrôleur 22, qui est cadencé par une horloge basse fréquence, en provenance d'un oscillateur à faible consommation, comprenant un oscillateur du type RC ou un oscillateur en anneau. Les mesures effectuées par les capteurs sont converties numériquement dans le microcontrôleur pour être mémorisées dans une unité mémoire 21 dans des positions définies. Les données de mesure converties sont en principe mémorisées dans une mémoire volatile du type SRAM, car cela nécessite une faible consommation de mémorisation dans ce type de mémoire. Cependant, si le niveau de la tension d'alimentation est suffisant, ces données de mesure sont mémorisées dans une mémoire non-volatile comme une mémoire FLASH, qui nécessite plus de consommation pour la mémorisation d'informations. Dans ces conditions, il est prévu de détecter dans le microcontrôleur le niveau de la tension d'alimentation afin de savoir dans quel type de mémoire les données de mesure peuvent être mémorisées. En dessous d'un seuil de tension défini, les données de mesure sont mémorisées dans la mémoire volatile, alors qu'au-dessus de ce seuil de tension les données de mesure sont mémorisées dans la mémoire non-volatile NVM.

Comme indiqué ci-devant, il peut être prévu plusieurs sources d'énergie d'appoint 4, voire également une petite batterie. L'énergie est extraite de ces sources d'énergie par un extracteur 26 bien connu, qui est représenté dans le circuit transpondeur 20 par une diode. Un accumulateur (condensateur) 27 en sortie de l'extracteur est chargé afin de permettre la fourniture de la tension d'alimentation pour le circuit transpondeur 20. Cependant au lieu de l'accumulateur, il peut s'agir également d'un élément à super-capacité si la source d'énergie d'appoint est présente en permanence, comme les vibrations d'un moteur, ou un hangar éclairé en permanence par exemple.

Le module à transpondeur 2 comprend encore un récepteur 25, qui peut être un récepteur de signaux à haute fréquence HF 25 afin de recevoir des signaux à haute fréquence S_{R} par une première antenne 12' en provenance d'un dispositif de lecture 3 en interrogation. Un redresseur conventionnel non représenté, qui peut être dans le récepteur HF de signaux 25, est prévu pour redresser les signaux captés et permettre de fournir également de l'énergie pour l'alimentation électrique du module à transpondeur 2. Les signaux à haute fréquence peuvent être des signaux à fréquence porteuse supérieure à 400 MHz, par exemple à 434 MHz, 868 MHz ou 916 MHz avec une préférence pour la fréquence de 868 MHz. Le récepteur HF 25 peut rester en partie au repos ou avoir certaines parties de réception activées en permanence avant conversion des signaux. Ces parties activées du récepteur ne consomment que fort peu de courant tant qu'une conversion de signaux de réception n'est pas effectuée.

Le module à transpondeur 2 comprend encore un transmetteur 23 pour transmettre des signaux à ultra haute fréquence S_{T} par une seconde antenne 12 quand il est activé. Ce transmetteur 23 est cadencé par un propre oscillateur à quartz 24, qui peut être à une fréquence d'oscillation de l'ordre de 26 MHz par exemple. Dès la réception de signaux d'interrogation par le récepteur 25, la conversion des signaux captés par la première antenne 12' peut être effectuée en liaison avec l'oscillateur 24 du transmetteur 23 et un synthétiseur de fréquence traditionnel.

Il est encore à noter que pour le réveil et réception de signaux du module à transpondeur 2, le récepteur 25 peut être en mesure de capter des signaux à basse fréquence de l'ordre de 125 kHz ou à haute fréquence de l'ordre de 13 MHz (NFC) ou supérieure à 400 MHz par exemple à 868 MHz. Une conversion des signaux est effectuée sur la base de l'oscillateur RC du microcontrôleur 22. Dans ces conditions, le récepteur peut rester activé en permanence.

Il peut aussi être envisagé d'effectuer le réveil du module à transpondeur 2 par tout autre moyen, tel que par réception d'un signal optique, infrarouge, ultrasonique ou autre.

Une fois que le module à transpondeur 2, porté par un objet mobile, s'approche à une courte distance d'un dispositif de lecture par exemple comme pour une communication en champ proche NFC, le dispositif de lecture transmet un signal d'interrogation et/ou de synchronisation au module à transpondeur 2, qui le détecte à proximité. Dès cet instant, le module à transpondeur 2 peut activer entièrement le récepteur 25 et le transmetteur 23 avec son oscillateur 24 pour lui permettre de transmettre des signaux de données S_{T} à ultra haute fréquence, par exemple à une fréquence porteuse au-dessus de 2 GHz et de préférence de l'ordre de 5.8 GHz. Toutes les données de mesure mémorisées dans l'unité mémoire 21 et cadencée par l'oscillateur RC du microcontrôleur 22 sont transmises dès l'activation du transmetteur, qui peut transmettre des données à faible puissance grâce à sa proximité du dispositif de lecture. Les données de mesure peuvent être modulées en phase (OQPSK) et transmises à très haut débit par exemple à un débit de l'ordre de 26 Mbits/s.

Comme chaque module à transpondeur comprend un numéro d'identification personnalisé par exemple à la personne ou à l'animal le portant, il peut être autorisé le questionnement de plusieurs modules à transpondeur à proximité d'un même dispositif de lecture. Il n'y pas de risque de collision des données de mesure transmises par chaque transmetteur activé à proximité d'un même dispositif de lecture.

La tension d'alimentation utilisée pour le fonctionnement du module à transpondeur 2 peut être inférieure à 3 V par exemple de l'ordre de 0.6 V en étant extraite d'au moins une source d'énergie d'appoint 4. Une fois qu'une communication avec un dispositif de lecture est effectuée, de l'énergie des signaux captés en réception peut être obtenue par un redresseur pour assurer aussi l'alimentation électrique du module à transpondeur 2.

Selon le procédé de mise en action du module à transpondeur RFID 2 pour la transmission d'informations à un dispositif de lecture, il est prévu d'effectuer plusieurs mesures dans le temps par le ou les capteurs 5 sur la commande du microcontrôleur 22 du module à transpondeur 2. Au moins le microcontrôleur 22 et les capteurs 5 peuvent être activés périodiquement le temps de chaque mesure et en mode faible puissance le reste du temps en étant alimentés par au moins une source d'énergie d'appoint 4 après extraction d'énergie et accumulation de charges sur un accumulateur 27, ou une petite batterie. Les différentes mesures effectuées par les capteurs 5 sont mémorisées numériquement dans la mémoire volatile ou la mémoire non volatile de l'unité mémoire 21 avec indication du temps de la mesure en étant cadencées par l'oscillateur basse fréquence du microcontrôleur 22. Il peut aussi être possible que le microcontrôleur 22 effectue un prétraitement des mesures avant de les enregistrer dans l'unité mémoire.

Dès que le module à transpondeur 2 porté par l'objet mobile s'approche à une courte distance définie de détection d'un dispositif de lecture, le dispositif de lecture transmet un signal d'interrogation et/ou de synchronisation, qui est capté par la première antenne 12' du récepteur 25 du circuit transpondeur 20 du module à transpondeur 2. Dès cet instant, une synchronisation du circuit transpondeur 21 peut être effectuée et une activation complète du récepteur et du transmetteur est effectuée. Les données de mesure mémorisées sont de préférence complètement transmises à très haut débit supérieur à 10 Mbits/s et de préférence de l'ordre de 26 Mbits/s par la seconde antenne 12 du transmetteur UHF 23 activé. Cependant la première antenne et la seconde antenne peuvent aussi ne constituer qu'une seule antenne bi-bande. Une fois que toutes les données de mesure ont été transmises avec indication des périodes temporelles de chaque mesure en tenant compte par exemple de la synchronisation du circuit transpondeur 20, au moins le transmetteur 24, voire une partie du récepteur 25 sont désactivés. Le transmetteur 24 et le récepteur 25 restent placés dans un mode de repos jusqu'au moment d'une nouvelle interrogation d'un dispositif de lecture quand le module à transpondeur 2 s'approche à nouveau d'un dispositif de lecture.

Il est à noter que toutes les données de mesure transmises par le module à transpondeur 2 peuvent servir dans une station de traitement pour un suivi médical (biorythme) ou des habitudes de mobilité de la personne ou de l'animal portant le module à transpondeur 2.

A partir de la description qui vient d'être faite, plusieurs variantes de réalisation du module à transpondeur et du système de communication le comprenant peuvent être conçues par l'homme du métier sans sortir du cadre de l'invention définie par les revendications.

## Revendications

1. Module à transpondeur (2) destiné à être placé sur un objet mobile (10) et agencé pour transmettre des informations à proximité d'un dispositif de lecture (3, 3'), sur la base d'un signal d'interrogation transmis par le dispositif de lecture (3, 3') et reçu par le module à transpondeur (2), le module à transpondeur comprenant :
- au moins une source d'énergie d'appoint (4) pour fournir de l'énergie par extraction d'énergie pour l'alimentation électrique du module à transpondeur (2),
- au moins un capteur (5) pour effectuer une plusieurs mesures d'au moins un paramètre physique,
- un microcontrôleur (22) relié au capteur de mesure (5) pour recevoir les mesures du capteur (5),
- une unité mémoire (21) pour mémoriser dans au moins une mémoire les données de mesure de des mesures effectuées par le capteur (5) et traitées dans le microcontrôleur (22) pour leur mémorisation,
- un récepteur (25) agencé pour recevoir au moins un signal d'interrogation d'un dispositif de lecture (3, 3'), quand le module à transpondeur (2) se trouve à proximité d'un dispositif de lecture (3, 3'), et
- un transmetteur (23) agencé pour transmettre des données de mesure mémorisées sur la base de l'interrogation d'un dispositif de lecture, le microcontrôleur (22) étant cadencé par un oscillateur interne à basse fréquence, qui est un oscillateur de type RC ou en anneau, pour cadencer les mesures effectuées par le capteur (5) dans le temps, ces mesures étant mémorisées dans l'unité mémoire (21) avec indication du temps de chaque mesure dans un mode faible puissance, au moins le microcontrôleur (22) et le capteur (5) étant alimentés en continu par la source d'énergie d'appoint (4),
le transmetteur (23), une fois activé suite à la réception d'un signal d'interrogation par le récepteur (25) d'un dispositif de lecture à proximité, étant agencé pour transmettre des signaux de données de mesure mémorisées à ultra haute fréquence et à un très haut débit supérieur à 10 Mbits/s, et
l'unité mémoire (21) comprenant une mémoire volatile et une mémoire non volatile, et en fonction d'un niveau de la tension d'alimentation détecté par le microcontrôleur (22), le microcontrôleur (22) est en mesure de mémoriser les données de mesure d'un ou plusieurs capteurs (5) dans la mémoire non volatile, si le niveau de tension d'alimentation est supérieur à un seuil défini, et dans la mémoire volatile, si le niveau de tension d'alimentation est inférieur au seuil défini.

2. Module à transpondeur (2) selon la revendication 1, **caractérisé en ce que** le transmetteur (23) est en mesure de transmettre toutes les données de mesure mémorisées dans l'unité mémoire (21) une fois que le récepteur a reçu le signal d'interrogation d'un dispositif de lecture (3, 3').

3. Module à transpondeur (2) selon l'une des revendications 1 et 2, **caractérisé en ce que** le transmetteur UHF (23) est agencé pour transmettre des signaux de données de mesure à une fréquence porteuse supérieure à 2 GHz et de préférence de l'ordre de 5.8 GHz.

4. Module à transpondeur (2) selon l'une des revendications 1 et 2, caractérisé et en ce que le transmetteur UHF (23) est agencé pour transmettre des signaux de données de mesure à un très haut débit de l'ordre de 26 Mbits/s.

5. Module à transpondeur (2) selon la revendication 1, **caractérisé en ce que** le transmetteur (23) est en mesure de transmettre les données de mesure mémorisées modulées en phase du type OQPSK.

6. Module à transpondeur (2) selon la revendication 1, **caractérisé en ce que** la source d'énergie d'appoint (4) est une cellule solaire ou un générateur thermoélectrique (TEG) ou un circuit à induction magnétique ou un élément piézoélectrique.

7. Module à transpondeur (2) selon la revendication 1, **caractérisé en ce qu'**il comprend plusieurs sources d'énergie d'appoint (4) reliées à un extracteur (26) d'énergie du module à transpondeur (2) pour accumuler des charges dans un accumulateur (27) ou dans un élément à super-capacité pour alimenter électriquement et en continu le module à transpondeur (2).

8. Module à transpondeur (2) selon la revendication 1, **caractérisé en ce que** le microcontrôleur (22) est relié à l'unité mémoire (21), qui comprend au moins la mémoire volatile, et au récepteur (25) et au transmetteur (23) pour former un circuit transpondeur (20).

9. Module à transpondeur (2) selon la revendication 1, **caractérisé en ce qu'**il comprend plusieurs capteurs de mesure (5) agencés chacun pour effectuer une ou des mesures d'un paramètre physique respectif, et reliés au microcontrôleur (22) pour la mémorisation des données de mesure dans l'unité mémoire (21).

10. Module à transpondeur (2) selon la revendication 9, **caractérisé en ce que** les capteurs (5) sont agencés pour effectuer des mesures de biorythmes d'une personne ou d'un animal, qui constituent l'objet mobile (10).

11. Module à transpondeur (2) selon la revendication 9, **caractérisé en ce que** les capteurs (5) sont agencés pour effectuer chacun plusieurs mesures dans le temps, toutes les mesures étant mémorisées dans l'unité mémoire (21) dans des positions définies.

12. Module à transpondeur (2) selon la revendication 1, **caractérisé en ce que** le récepteur (25) est agencé pour recevoir un ou des signaux à une basse fréquence de l'ordre de 125 kHz ou à haute fréquence de l'ordre de 13 MHz ou supérieure à 400 MHz et de préférence de l'ordre de 868 MHz.

13. Module à transpondeur (2) selon la revendication 12, **caractérisé en ce que** le récepteur (25) est agencé pour recevoir un signal d'interrogation et de synchronisation provenant d'un dispositif de lecture (3, 3') à proximité du module à transpondeur (2).

14. Module à transpondeur (2) selon la revendication 13, **caractérisé en ce que** le transmetteur (23) est agencé pour être activé dès la réception du signal d'interrogation et de synchronisation et en étant cadencé par un oscillateur à quartz de fréquence de l'ordre de 26 MHz.

15. Système (1) de communication d'informations, qui comprend au moins un module à transpondeur (2) selon l'une des revendications précédentes et au moins un dispositif de lecture (3, 3'), **caractérisé en ce que** le module à transpondeur (2) est en mesure de communiquer des données de mesure mémorisées dans l' unité mémoire (21) du module à transpondeur (2) à ultra haute fréquence et à un très haut débit supérieur à 10 Mbits/s suite à la réception d'un signal d'interrogation d'un dispositif de lecture à proximité.

16. Procédé de mise en action d'un module à transpondeur (2) selon l'une des revendications 1 à 14, dans un système (1) de communication d'informations, le procédé comprenant les étapes de :
- effectuer plusieurs mesures dans le temps par un ou plusieurs capteurs (5) en étant contrôlé par un microcontrôleur (22) du module à transpondeur (2), qui est alimenté en continu par une source d'énergie (4), et qui est cadencé par un oscillateur interne à basse fréquence, qui est un oscillateur de type RC ou en anneau dans un mode faible puissance,
- mémoriser toutes les données de mesures traitées par le microcontrôleur (22) dans une unité mémoire (21) avec indication du temps de chaque mesure dans un mode faible puissance, l'unité mémoire (21) comprenant une mémoire volatile et une mémoire non volatile, et en fonction d'un niveau de la tension d'alimentation détecté par le microcontrôleur (22), le microcontrôleur (22) est en mesure de mémoriser les données de mesure d'un ou plusieurs capteurs (5) dans la mémoire non volatile, si le niveau de tension d'alimentation est supérieur à un seuil défini, et dans la mémoire volatile, si le niveau de tension d'alimentation est inférieur au seuil défini,
- recevoir un signal d'interrogation d'un dispositif de lecture (3, 3') par le récepteur (25) du module à transpondeur (2), quand il se trouve à proximité du dispositif de lecture (3, 3'),
- dès la réception du signal d'interrogation, activer entièrement le transmetteur (23) à ultra haute fréquence pour la transmission des données de mesure mémorisées à un très haut débit supérieur à 10 Mbits/s au dispositif de lecture (3, 3') en communication.

17. Procédé de mise en action d'un module à transpondeur (2) selon la revendication 16, **caractérisé en ce que** le récepteur (25) du module à transpondeur (2) reçoit un signal d'interrogation et de synchronisation du dispositif de lecture (3, 3') à proximité pour synchroniser le microcontrôleur (22) et les données de mesure mémorisées.

18. Procédé de mise en action d'un module à transpondeur (2) selon la revendication 16, **caractérisé en ce qu'**une fois que le transmetteur (23) a transmis toutes les données de mesure à très haut débit dans un laps de temps inférieure à 1 seconde au dispositif de lecture en communication, il est désactivé et passe dans un mode de repos jusqu'à une prochaine interrogation d'un dispositif de lecture (3, 3').

## Patentansprüche

1. Transpondermodul (2), das dazu bestimmt ist, auf einem beweglichen Gegenstand (10) platziert zu werden, und das angeordnet ist, um Informationen in der Nähe einer Lesevorrichtung (3, 3') aufgrund eines Abfragesignals zu senden, das von der Lesevorrichtung (3, 3') gesendet und von dem Transpondermodul (2) empfangen wird, wobei das Transpondermodul umfasst:
- mindestens eine Hilfsenergiequelle (4) zum Liefern von Energie mittels Energieabziehung für die elektrische Versorgung des Transpondermoduls (2),
- mindestens einen Sensor (5) zum Durchführen mehrerer Messungen von mindestens einem physikalischen Parameter,
- einen Mikrocontroller (22), der mit dem Messsensor (5) verbunden ist, um die Messungen des Sensors (5) zu empfangen,
- eine Speichereinheit (21), um in mindestens einem Speicher die Messdaten der Messungen zu speichern, die von dem Sensor (5) durchgeführt werden und in dem Mikrocontroller (22) für deren Speicherung verarbeitet werden,
- einen Empfänger (25), der angeordnet ist, um mindestens ein Abfragesignal einer Lesevorrichtung (3, 3') zu empfangen, wenn sich das Transpondermodul (2) in der Nähe einer Lesevorrichtung (3, 3') befindet, und
- einen Sender (23), der angeordnet ist, um gespeicherte Messdaten aufgrund der Abfrage einer Lesevorrichtung zu senden,
wobei der Mikrocontroller (22) von einem internen Niederfrequenz-Oszillator getaktet wird, der ein Oszillator vom Typ RC- oder Ringoszillator ist, um die von dem Sensor (5) durchgeführten Messungen zeitlich zu takten, wobei diese Messungen in der Speichereinheit (21) mit Angabe der Zeit jeder Messung in einem leistungsarmen Modus gespeichert werden, wobei mindestens der Mikrocontroller (22) und der Sensor (5) von der Hilfsenergiequelle (4) permanent versorgt werden,
wobei der Sender (23), sobald er nach dem Empfang eines Abfragesignals von dem Empfänger (25) einer Lesevorrichtung in der Nähe aktiviert wird, angeordnet ist, um Signale gespeicherter Messdaten mit Ultrahochfrequenz und mit sehr hoher Übertragungsrate, die größer ist als 10 Mbits/s, zu senden, und
wobei die Speichereinheit (21) einen flüchtigen Speicher und einen nicht-flüchtigen Speicher umfasst, und je nach einer Höhe der Versorgungsspannung, die von dem Mikrocontroller (22) erfasst wird, der Mikrocontroller (22) imstande ist, die Messdaten eines oder mehrerer Sensoren (5) in dem nicht-flüchtigen Speicher zu speichern, wenn die Höhe der Versorgungsspannung größer ist als ein definierter Grenzwert, und in dem flüchtigen Speicher, wenn die Höhe der Versorgungsspannung niedriger ist als der definierte Grenzwert.

2. Transpondermodul (2) nach Anspruch 1, **dadurch gekennzeichnet, dass** der Sender (23) imstande ist, alle in der Speichereinheit (21) gespeicherten Messdaten zu senden, sobald der Empfänger das Abfragesignal einer Lesevorrichtung (3, 3') empfangen hat.

3. Transpondermodul (2) nach einem der Ansprüche 1 und 2, **dadurch gekennzeichnet, dass** der UHF-Sender (23) angeordnet ist, um Signale von Messdaten mit einer Trägerfrequenz zu senden, die größer ist als 2 GHz und vorzugsweise im Bereich von 5,8 GHz liegt.

4. Transpondermodul (2) nach einem der Ansprüche 1 und 2, **dadurch gekennzeichnet, dass** der UHF-Sender (23) angeordnet ist, um Signale von Messdaten mit einer sehr hohen Übertragungsrate zu senden, die im Bereich von 26 Mbits/s liegt.

5. Transpondermodul (2) nach Anspruch 1, **dadurch gekennzeichnet, dass** der Sender (23) imstande ist, die gespeicherten Messdaten phasenmoduliert vom Typ OQPSK zu senden.

6. Transpondermodul (2) nach Anspruch 1, **dadurch gekennzeichnet, dass** die Hilfsenergiequelle (4) eine Solarzelle oder ein thermoelektrischer Generator (TEG) oder ein Stromkreis mit magnetischer Induktion oder ein Piezoelement ist.

7. Transpondermodul (2) nach Anspruch 1, **dadurch gekennzeichnet, dass** es mehrere Hilfsenergiequellen (4) umfasst, die mit einem Energieabzieher (26) des Transpondermoduls (2) verbunden sind, um Ladungen in einem Akkumulator (27) oder in einem Hochleistungselement zu akkumulieren, um das Transpondermodul (2) elektrisch und permanent zu versorgen.

8. Transpondermodul (2) nach Anspruch 1, **dadurch gekennzeichnet, dass** der Mikrocontroller (22) mit der Speichereinheit (21) verbunden ist, die mindestens den flüchtigen Speicher umfasst, und mit dem Empfänger (25) und mit dem Sender (23), um einen Transponderstromkreis (20) zu bilden.

9. Transpondermodul (2) nach Anspruch 1, **dadurch gekennzeichnet, dass** es mehrere Messsensoren (5) umfasst, die jeweils angeordnet sind, um eine oder mehrere Messungen eines jeweiligen physikalischen Parameters durchzuführen, und die mit dem Mikrocontroller (22) für die Speicherung der Messdaten in der Speichereinheit (21) verbunden sind.

10. Transpondermodul (2) nach Anspruch 9, **dadurch gekennzeichnet, dass** die Sensoren (5) angeordnet sind, um Biorhythmusmessungen einer Person oder eines Tiers durchzuführen, die den beweglichen Gegenstand (10) bilden.

11. Transpondermodul (2) nach Anspruch 9, **dadurch gekennzeichnet, dass** die Sensoren (5) angeordnet sind, um jeweils mehrere Messungen im zeitlichen Verlauf durchzuführen, wobei alle Messungen in der Speichereinheit (21) in definierten Positionen gespeichert werden.

12. Transpondermodul (2) nach Anspruch 1, **dadurch gekennzeichnet, dass** der Empfänger (25) angeordnet ist, um eines oder mehrere Signale mit Niederfrequenz im Bereich von 125 kHz oder mit Hochfrequenz im Bereich von 13 MHz oder größer als 400 MHz und vorzugsweise im Bereich von 868 MHz zu empfangen.

13. Transpondermodul (2) nach Anspruch 12, **dadurch gekennzeichnet, dass** der Empfänger (25) angeordnet ist, um ein Abfrage- und Synchronisationssignal zu empfangen, das von einer Lesevorrichtung (3, 3') in der Nähe des Transpondermoduls (2) stammt.

14. Transpondermodul (2) nach Anspruch 13, **dadurch gekennzeichnet, dass** der Sender (23) angeordnet ist, um nach dem Empfang des Abfrage- und Synchronisationssignals aktiviert zu werden, wobei er von einem Quarzoszillator mit einer Frequenz im Bereich von 26 MHz getaktet wird.

15. System (1) zur Kommunikation von Informationen, das mindestens ein Transpondermodul (2) nach einem der vorstehenden Ansprüche und mindestens eine Lesevorrichtung (3, 3') umfasst, **dadurch gekennzeichnet, dass** das Transpondermodul (2) imstande ist, Messdaten, die in der Speichereinheit (21) des Transpondermoduls (2) gespeichert sind, mit Ultrahochfrequenz und mit sehr hoher Übertragungsrate, die größer ist als 10 Mbits/s, nach dem Empfang eines Abfragesignals einer Lesevorrichtung in der Nähe zu kommunizieren.

16. Verfahren zur Betätigung eines Transpondermoduls (2) nach einem der Ansprüche 1 bis 14, in einem System (1) zur Kommunikation von Informationen, wobei das Verfahren folgende Schritte umfasst:
- Durchführen mehrerer Messungen im zeitlichen Verlauf durch einen oder mehrere Sensoren (5), wobei sie von einem Mikrocontroller (22) des Transpondermoduls (2) gesteuert werden, der von einer Energiequelle (4) permanent versorgt wird und der von einem internen Niederfrequenz-Oszillator getaktet wird, der ein Oszillator vom Typ RC- oder Ringoszillator ist, in einem leistungsarmen Modus,
- Speichern aller Messdaten, die von den Mikrocontroller (22) verarbeitet werden, in einer Speichereinheit (21) mit Angabe der Zeit jeder Messung in einem leistungsarmen Modus, wobei die Speichereinheit (21) einen flüchtigen Speicher und einen nicht-flüchtigen Speicher umfasst, und je nach einer Höhe der Versorgungsspannung, die von dem Mikrocontroller (22) erfasst wird, der Mikrocontroller (22) imstande ist, die Messdaten eines oder mehrerer Sensoren (5) in dem nicht-flüchtigen Speicher zu speichern, wenn die Höhe der Versorgungsspannung größer ist als ein definierter Grenzwert, und in dem flüchtigen Speicher, wenn die Höhe der Versorgungsspannung niedriger ist als der definierte Grenzwert,
- Empfangen eines Abfragesignals einer Lesevorrichtung (3, 3') durch den Empfänger (25) des Transpondermoduls (2), wenn er sich in der Nähe der Lesevorrichtung (3, 3') befindet,
- nach dem Empfang des Abfragesignals, vollständiges Aktivieren des Senders (23) mit Ultrahochfrequenz zum Senden der gespeicherten Messdaten mit einer sehr hohen Übertragungsrate, die größer ist als 10 Mbits/s, an die Lesevorrichtung (3, 3') in Kommunikation.

17. Verfahren zur Betätigung eines Transpondermoduls (2) nach Anspruch 16, **dadurch gekennzeichnet, dass** der Empfänger (25) des Transpondermoduls (2) ein Abfrage- und Synchronisationssignal der Lesevorrichtung (3, 3') in der Nähe empfängt, um den Mikrocontroller (22) und die gespeicherten Messdaten zu synchronisieren.

18. Verfahren zur Betätigung eines Transpondermoduls (2) nach Anspruch 16, **dadurch gekennzeichnet, dass**, sobald der Sender (23) alle Messdaten mit sehr hoher Übertragungsrate in einem Zeitfenster von weniger als 1 Sekunde an die Lesevorrichtung in Kommunikation gesendet hat, dieser deaktiviert wird und bis zu einer nächsten Abfrage einer Lesevorrichtung (3, 3') in einen Ruhemodus übergeht.

## Claims

1. Transponder-based module (2) intended to be placed on a mobile object (10) and designed to transmit information in proximity to a reading device (3, 3'), on the basis of an interrogation signal transmitted by the reading device (3, 3') and received by the transponder-based module (2), the transponder-based module comprising:
- at least one auxiliary energy source (4) for providing energy by energy extraction for the electrical power supply of the transponder-based module (2),
- at least one sensor (5) for performing a plurality of measurements of at least one physical parameter,
- a microcontroller (22) linked to the measurement sensor (5) for receiving the measurements of the sensor (5),
- a memory unit (21) for storing in at least one memory the measurement data of the measurements performed by the sensor (5) and processed in the microcontroller (22) for their storage,
- a receiver (25) designed to receive at least one interrogation signal from a reading device (3, 3'), when the transponder-based module (2) is situated in proximity to a reading device (3, 3'), and
- a transmitter (23) designed to transmit measurement data stored on the basis of the interrogation of a reading device,
the microcontroller (22) being regulated by a low-frequency internal oscillator, which is an oscillator of RC or ring type, so as to regulate the measurements performed by the sensor (5) over time, these measurements being stored in the memory unit (21) with indication of the time of each measurement in a low power mode, at least the microcontroller (22) and the sensor (5) being powered continuously by the auxiliary energy source (4),
the transmitter (23), once activated subsequent to the reception of an interrogation signal by the receiver (25) of a reading device in proximity, being designed to transmit signals of measurement data stored at ultra-high frequency and at a very high bitrate greater than 10 Mbits/s, and
the memory unit (21) comprising a volatile memory and a nonvolatile memory, and as a function of the level of the supply voltage detected by the microcontroller (22), the microcontroller (22) is able to store the measurement data of one or more sensors (5) in the nonvolatile memory, if the supply voltage level is greater than a defined threshold, and in the volatile memory, if the supply voltage level is less than the defined threshold.

2. Transponder-based module (2) according to claim 1, **characterized in that** the transmitter (23) is able to transmit all the measurement data stored in the memory unit (21) once the receiver has received the interrogation signal from a reading device (3, 3').

3. Transponder-based module (2) according to either of claims 1 and 2, **characterized in that** the UHF transmitter (23) is designed to transmit signals of measurement data at a carrier frequency greater than 2 GHz and preferably of the order of 5.8 GHz.

4. Transponder-based module (2) according to either of claims 1 and 2, **characterized in that** the UHF transmitter (23) is designed to transmit signals of measurement data at a very high bitrate of the order of 26 Mbits/s.

5. Transponder-based module (2) according to claim 1, **characterized in that** the transmitter (23) is able to transmit the stored measurement data phase-modulated of the OQPSK type.

6. Transponder-based module (2) according to claim 1, **characterized in that** the auxiliary energy source (4) is a solar cell or a thermoelectric generator (TEG) or a magnetic induction circuit or a piezoelectric element.

7. Transponder-based module (2) according to claim 1, **characterized in that** it comprises several auxiliary energy sources (4) linked to an extractor (26) of energy of the transponder-based module (2) so as to accumulate charges in an accumulator (27) or in a super-capacitor element to electrically and continuously supply power to the transponder-based module (2).

8. Transponder-based module (2) according to claim 1, **characterized in that** the microcontroller (22) is linked to the memory unit (21), which comprises at least the volatile memory, and to the receiver (25) and to the transmitter (23) to form a transponder circuit (20).

9. Transponder-based module (2) according to claim 1, **characterized in that** it comprises several measurement sensors (5) each designed to perform one or more measurements of a respective physical parameter, and linked to the microcontroller (22) for the storage of the measurement data in the memory unit (21).

10. Transponder-based module (2) according to claim 9, **characterized in that** the sensors (5) are designed to perform measurements of biorhythms of a person or of an animal, that constitute the mobile object (10).

11. Transponder-based module (2) according to claim 9, **characterized in that** the sensors (5) are designed to each perform several measurements over time, all the measurements being stored in the memory unit (21) in defined positions.

12. Transponder-based module (2) according to claim 1, **characterized in that** the receiver (25) is designed to receive one or more signals at a low frequency of the order of 125 kHz or at high-frequency of the order of 13 MHz or greater than 400 MHz and preferably of the order of 868 MHz.

13. Transponder-based module (2) according to claim 12, **characterized in that** the receiver (25) is designed to receive an interrogation and synchronization signal originating from a reading device (3, 3') in proximity to the transponder-based module (2).

14. Transponder-based module (2) according to claim 13, **characterized in that** the transmitter (23) is designed to be activated right from the reception of the interrogation and synchronization signal and while being regulated by a quartz oscillator of frequency of the order of 26 MHz.

15. System (1) for information communication, which comprises at least one transponder-based module (2) according to one of the preceding claims and at least one reading device (3, 3'), **characterized in that** the transponder-based module (2) is able to communicate measurement data stored in the memory unit (21) of the transponder-based module (2) at ultra-high frequency and at a very high bitrate greater than 10 Mbits/s subsequent to the reception of an interrogation signal from a reading device in proximity.

16. Method of enabling a transponder-based module (2) according to one of claims 1 to 14, in a system (1) for information communication, the method comprising the steps of:
- performing several measurements over time via one or more sensors (5) while being controlled by a microcontroller (22) of the transponder-based module (2), which is powered continuously by an energy source (4), and which is regulated by a low-frequency internal oscillator, which is an oscillator of RC or ring type in a low power mode,
- storing all the measurement data processed by the microcontroller (22) in a memory unit (21) with indication of the time of each measurement in a low power mode, the memory unit (21) comprising a volatile memory and a nonvolatile memory, and as a function of the level of the supply voltage detected by the microcontroller (22), the microcontroller (22) is able to store the measurement data of one or more sensors (5) in the nonvolatile memory, if the supply voltage level is greater than a defined threshold, and in the volatile memory, if the supply voltage level is less than the defined threshold,
- receiving an interrogation signal from a reading device (3, 3') via the receiver (25) of the transponder-based module (2), when it is situated in proximity to the reading device (3, 3'),
- right from the reception of the interrogation signal, fully activating the transmitter (23) at ultra-high frequency for the transmission of the measurement data stored at a very high bitrate greater than 10 Mbits/s to the reading device (3, 3') in communication.

17. Method of enabling a transponder-based module (2) according to claim 16, **characterized in that** the receiver (25) of the transponder-based module (2) receives an interrogation and synchronization signal from the reading device (3, 3') in proximity so as to synchronize the microcontroller (22) and the stored measurement data.

18. Method of enabling a transponder-based module (2) according to claim 16, **characterized in that** once the transmitter (23) has transmitted all the measurement data at very high bitrate in a time span of less than 1 second to the reading device in communication, it is deactivated and passes into an idle mode until a next interrogation of a reading device (3, 3').
